# EUROPÄISCHE PATENTANMELDUNG

(11) **EP 1 837 723 A2**
(43) Veröffentlichungstag der Anmeldung: **26.09.2007**
(21) Anmeldenummer: 07005764.1
(22) Anmeldetag: 21.03.2007
(51) Int. Cl.: G05B 19/042

(54) **Sicherheitseinrichtung für ein mehrteiliges elektrisch verstellbares Möbel**

(30) Priorität: 23.03.2006 DE 102006013349
(71) Anmelder: Kostal Industrie Elektrik GmbH, 58507 Lüdenscheid (DE)
(72) Erfinder: Werdün, Guido, 58313 Herdecke (DE); Junker, Sven, 58509 Lüdenscheid (DE)

(57) **Zusammenfassung**

Beschrieben wird ein mehrteiliges Möbel mit zumindest einem für die Verstellung eines in zwei entgegengesetzte Richtungen bewegbaren Möbelteiles vorgesehenen elektromotorischen Antrieb, wobei ein Steuersystem eine bei der Verstellung des Möbelteiles wirksame, zur Verhinderung unzulässiger Betriebszustände vorgesehene Sicherheitseinrichtung umfaßt, dadurch gekennzeichnet, daß der Sicherheitseinrichtung ein an dem bewegbaren Möbelteil angebrachter Neigungssensor zugeordnet ist, dessen Ausgangssignal durch die Sicherheitseinrichtung zur Erkennung einer unzulässigen Lage des bewegbaren Möbelteils ausgewertet wird.
Bei dem mehrteiligen Möbel und dem bewegbaren Möbelteil handelt es sich vorzugsweise um einen Tisch und eine Tischplatte oder um ein Bett und einen Lattenrost.

## Beschreibung

Die vorliegende Erfindung betrifft ein mehrteiliges Möbel mit zumindest einem für die Verstellung eines in zwei entgegengesetzte Richtungen bewegbaren Möbelteiles vorgesehenen elektromotorischen Antrieb, wobei ein Steuersystem eine bei der Verstellung des Möbelteiles wirksame, zur Verhinderung unzulässiger Betriebszustände vorgesehene Sicherheitseinrichtung umfaßt.

Ein derartiges Möbel ist aus der DE 102 60 478 A1 bekannt. Die Aufgabe der in diesem Dokument beschriebenen Erfindung bestand darin, ein Möbel mit einer besonders wirksamen Einklemmschutzvorrichtung zu schaffen, die insbesondere auch eine gefahrlose, automatisch ablaufende Verstellung der Möbelteile gegeneinander ermöglichen soll. Durch das Zusammenstauchen eines Klemmkörpers wird dabei eine Gegenkraft zur Antriebskraft aufgebaut, die eine Drehzahländerung des Antriebsmotors zur Folge hat. Je härter der Klemmkörper, desto größer ist die Gegenkraft bei konstantem Stauchweg und desto größer ist die Drehzahländerung.

Mit einer derartigen Einklemmschutzvorrichtung ist zwar ein Personen-Einklemmschutz durchaus zufriedenstellend zu erreichen, es gibt aber darüberhinaus weitere unzulässige Betriebszustände, die bei einer automatisch ablaufenden Verstellung von Möbelteilen auftreten können, bei denen diese Art der Sicherheitseinrichtung versagt.

So baut sich etwa beim Auffahren einer motorisch angetriebenen Tischplatte von oben auf eine zurückgekippte Lehne eines Bürostuhls die Gegenkraft in Folge der Nachgiebigkeit der Stuhllehne und der somit geringen Federrate, kontinuierlich auf, ohne dass die Dynamik der Drehzahländerung gross genug wäre, um als Einklemmen erkannt zu werden. Hierbei wird das Tischgewicht mit der Zeit durch den Stuhl entlastet, und der Fuß des Tischgestells hebt ab. Ein Drehzahleinbruch ist ab da nicht mehr erkennbar, und es kommt zum Umkippen des Tisches im Automatikbetrieb.

Auch bei einem direkten Kontakt des beweglichen Möbelteils mit dem Hindernis gleich zu Beginn des Bewegungsvorganges, wie er z.B. dann auftreten kann, wenn beim Start der Runterfahrt einer Tischplatte diese bereits auf einem Hindernis, beispielsweise einem benachbarten Tisch aufliegt, kann ein derartiges Problem auftreten. Die Last ist in einem solchen Falle bereits beim Anfahren konstant, da das Gewicht bereits vom Hindernistisch entlastet wird. Da aber ein Tisch als Hindernis sehr steif ist, kann er auch nicht gestaucht werden. Eine dynamische Kraftänderung, wie sie zur Erkennung eines Einklemmfalls erforderlich wäre, findet deshalb nicht statt. Im Extremfall verfährt daher die bewegliche Tischplatte bis in ihre Endstellung und der Tisch kippt möglicherweise im Automatikbetrieb um.

Das Umkippen oder zu starke Neigen des Tisches stellt eine Gefahr dar. Monitore oder andere Gegenstände könnten beim Runterfallen beschädigt werden oder Personen Schaden zufügen. Beim Umfallen von Kaffeetassen etwa besteht Verbrühungsgefahr.

Es ist daher die Aufgabe der Erfindung, ein elektromotorisch verstellbares, aus mehreren Teilen bestehendes Möbel zu schaffen, welches über eine Sicherheitseinrichtung verfügt, mit der auch solche unzulässigen Betriebszustände vermieden werden.

Diese Aufgabe wird erfindungsgemäß dadurch gelöst, daß der Sicherheitseinrichtung ein an dem bewegbaren Möbelteil angebrachter Neigungssensor zugeordnet ist, dessen Ausgangssignal durch die Sicherheitseinrichtung zur Erkennung einer unzulässigen Lage des bewegbaren Möbelteils ausgewertet wird.

Mittels des Neigungssensors ist die Sicherheitseinrichtung in der Lage, beispielweise eine Abweichung der Lage einer Tischplatte von ihrer bestimmungsgemäßen horizontalen Ausrichtung zu erkennen. Beim Erreichen einer festgelegten maximal zulässigen Abweichung dieser Lage kann dann der Antrieb abgeschaltet bzw. für einen vorbestimmten Weg in der Gegenrichtung angesteuert werden, etwa bis die Tischplatte wieder waagerecht steht.

Vorteilhaft ist es, wenn der Neigungssensor eine solche Lageveränderung bezüglich zweier unterschiedlicher, insbesondere im Winkel von 90° zueinander ausgerichteter Achsen detektieren kann. Damit ist praktisch jede Lageveränderung beispielsweise einer bestimmungsgemäß waagerecht im Raum ausgerichteten Tischplatte quantitativ erfassbar.

Besonders flexibel wird die Sicherheitseinrichtung durch die Möglichkeit, eine bestimmte Lage des Neigungssensors im Raum als Solllage zu definieren und die entsprechenden Sensorausgangswerte als Sollwerte abzuspeichern. Als Fehlersituation kann dann jeweils eine bestimmte Abweichung von diesen Sollwerten definiert, und deren Vorliegen anhand des aktuellen Sensorausgangswertes erkannt werden. Diese Flexibilität kann man sich insbesondere bei der Wahl des Anbringungsortes für den Neigungssensor zu nutze machen. Sie ermöglicht aber auch, je nach Bedarf eine andere Lage des beweglichen Möbelteils als die ursprüglich vorgesehene als neue Solllage festzulegen.

Besonders gut geeignet für die hier beschriebene Anwendung als Neigungssensoren sind mit einem mikromechanisch hergestellten Sensorelement versehene, als integrierte Halbleiterelemente ausgebildete Beschleunigungssensoren. Solche Sensoren, bei denen eine Beschleunigung, in diesem Falle die Erdbeschleunigung, durch die Veränderung eines Kapazitätswertes bestimmt wird, werden z.B. von der Fa. Analog Devices unter der Typenbezeichnung ADXL 322 vertrieben.

Zur Erzielung einer noch grösseren Sicherheit bei automatisch ablaufenden Verstellvorgängen beweglicher Möbelteile trägt die Integration der Erfassung der Neigung des Möbelteils mit der vorbekannten Einklemmschutzerkennung in einer Sicherheitsvorrichtung bei, die dementsprechend auf diese unterschiedlichen Fehlerzustände reagieren kann.

Eine weitere deutliche Verbesserung der Erkennbarkeit einer Fehlersituation ergibt sich durch den Einsatz von Gasdruckfedern als Ergänzung zu der eingesetzten elektromotorischen Antriebseinrichtung, wie er in der deutschen Patentanmeldung 10 2005 007 693.9 beschrieben ist. Die Gasdruckfedern führen dabei zu einer gleichmäßigen Belastung der elektromotorischen Antriebsvorrichtung in jeweils beiden Verstellrichtungen, so dass eine Bewegung in beide Richtungen mit annähernd gleichem Kraftaufwand möglich ist.

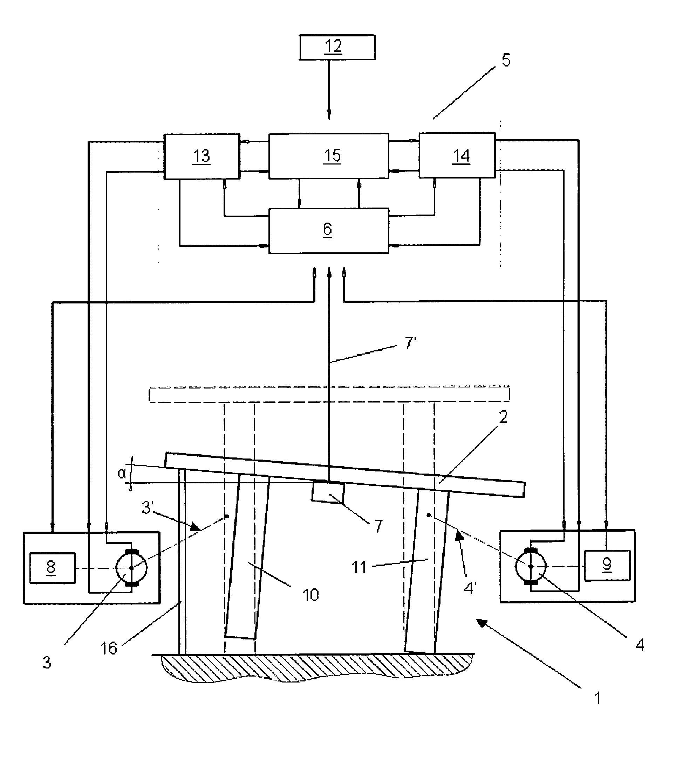

Besonders günstige Ausgestaltungen des erfindungsgemäßen Gegenstandes sind in den Unteransprüchen angegeben und werden anhand eines in der Zeichnung dargestellten Ausführungsbeispieles näher erläutert.

Wie aus der einzigen Figur hervorgeht, ist an einem vorzugsweise als Arbeitstisch ausgebildeten, auf beispielsweise dem Fußboden eines Arbeitsraumes plazierten mehrteiligen Möbel 1 ein in diesem Falle als Tischplatte 2 ausgebildetes Möbelteil motorisch verstellbar angeordnet. Zu diesem Zweck sind der Tischplatte 2 zwei Stellglieder 10, 11 zugeordnet, die mit jeweils einem elektromotorischen Antrieb 3, 4 über jeweils eine Wirkverbindung 3', 4' kooperieren und eine Verstellung der Tischplatte 2 über einen Verstellweg ermöglichen. Dabei erfolgt die Verstellung der Tischplatte 2 zwischen einer unteren und einer oberen Grenzlage synchron über die beiden zugeordneten elektromotorischen Antriebe 3, 4 und die zugehörigen Stellglieder 10, 11, wobei über den beiden Grenzlagen der Tischplatte 2 zugeordnete Endlagenschalter eine Abschaltung der elektromotorischen Antriebe 3, 4 in den beiden Grenzlagen erfolgt.

Die Verstellung selbst wird über ein Bedienteil 12 mittels den Verstellbewegungen "auf" und "ab" der Tischplatte 2 zugeordneten, in der Zeichnung nicht näher dargestellten Bedienelementen eingeleitet.

Neben der Grundfunktion, bei der die Tischplatte 2 solange in der jeweiligen Richtung bewegt wird, wie das entsprechende Bedienelement betätigt wird, ist zur Verbesserung des Bedienkomforts eine Automatikfunktion anwählbar, in der die Tischplatte 2 auch ohne andauernde Betätigung des Bedienelements bis in ihre jeweilige Endlage bzw. bis in eine vorbestimmte, beispielsweise aus einem Speicher abrufbare Solllage bewegt wird. Die Einleitung der Automatikfunktion wird z. B. durch eine zusätzliche Funktionsstellung des Bedienelements ermöglicht, wobei ein dem Steuersystem 5 zugehöriges Steuermodul 15, welches beispielsweise auch einen zur Speicherung mehrerer bedarfsweise abrufbarer Solllagen vorgesehenen Speicher umfasst, die Betätigung dieser Funktionsstellung registriert und den Automatikbetrieb entsprechend steuert, indem es über die Leistungsschalter 13, 14 die elektromotorischen Antriebe 3, 4 ansteuert.

Damit bei der Verstellung der Tischplatte 2 keine Verletzungen des Benutzers oder von im Verstellbereich der Tischplatte 2 befindlichen Personen z. B. durch das Einklemmen von Körperteilen zwischen einem ortsfesten Objekt und der verstellbaren Tischplatte 2 oder durch das Herunterfallen von Gegenständen beim unbeabsichtigten Kippen der Tischplatte 2 auftreten können, ist in dem Steuersystem 5 eine Sicherheitseinrichtung 6 integriert, die bei einer ungewöhnlichen Veränderung von an der Tischplatte 2 üblicherweise auftretenden physikalischen Größen eine sofortige Abschaltung der zugehörigen elektromotorischen Antriebe 3, 4 bzw. ggf. sogar eine Reversierung, d.h. eine Bewegungsumkehr derselben vornehmen kann.

Der Sicherheitseinrichtung funktional zugeordnet sind zu diesem Zweck Sensoren 7, 8, 9 zur Erfassung dieser Veränderungen, deren Ausgangssignale der Sicherheitseinrichtung 6 zur Auswertung zugeführt werden.

Dabei ist ein Neigungssensor 7 zur Überwachung der Lage der Tischplatte 2 vorhanden sowie zwei weitere Sensoren 8, 9, die zur Erkennung von Blockier- und Einklemmereignissen eine antriebscharakteristische Größe wie insbesondere die Drehzahl und/oder die Stromaufnahme der elektromotorischen Antriebe 3, 4 erfassen.

Der Wert, soweit dieser als konstant anzusehen ist, bzw. andernfalls sogar der zeit- oder wegabhängige Verlauf dieser antriebscharakteristischen Größen bei ungestörten Verstellbewegungen ist bekannt. Ein solcher Wert bzw. Verlauf ist in einem dafür vorgesehenen Speicher in der Sicherheitseinrichtung 6 abgelegt, so dass einklemmbedingte Abweichungen durch Vergleich der aktuell gemessenen Größen mit diesen gespeicherten Werten besonders sicher und mit geringem Aufwand erkannt werden können.

Durch den Neigungssensor 7 werden insbesondere solche Fehlersituationen erkannt, bei denen eine dynamische Kraftänderung, wie sie zur Erkennung eines Einklemmfalls durch die Sensoren 8, 9 erforderlich wäre, nicht stattfindet.

Eine derartige Situation ist beispielsweise etwa dann gegeben, wenn ein Hindernis 16, welches in der Zeichnung nur schematisch angedeutet ist, gleich zu Beginn des Bewegungsvorganges in Kontakt mit der Tischplatte 2 ist, oder aber das Hindernis 16 so weich ist, dass der Kraftaufbau zu langsam erfolgt.

Wenn dadurch, wie in der Zeichnung zu sehen, die Tischplatte 2 aus ihrer bestimmungsgemäßen horizontalen Ausrichtung in eine davon abweichende Lage gebracht wird, so wird diese Lageveränderung durch den Neigungssensor 7, der ortsfest mit der Tischplatte 2 verbunden ist, registriert. Aus dem Ausgangssignal 7' des Neigungssensors 7 kann die Sicherheitseinrichtung 6 den Kippwinkel α der Tischplatte 2 ermitteln und beim Erreichen eines maximal tolerablen Grenzwinkels *a*_{G} ein Anhalten bzw. Reversieren der Antriebe 3, 4 veranlassen.

Bei dem Neigungssensor 7 handelt es sich um einen sogenannten 2-achsigen integrierten Beschleunigungssensor, der die Neigung bezüglich zweier im Winkel von 90° zueinander ausgerichteter Achsen detektieren kann, so dass zusätzlich zu dem in der Zeichnung dargestellten Kippen der Tischplatte 2 um eine senkrecht zur Zeichenebene verlaufende Drehachse auch ein Kippen um eine in der Zeichenebene gelegene Drehachse erfassbar ist.

Eine Verbesserung der Einklemmerfassung lässt sich noch dadurch erreichen, dass als Bestandteil der Stellglieder 10, 11 oder in separater Anordnung direkt oder indirekt mit der bewegbaren Tischplatte 2 verbunden zwei Gasdruckfedern vorhanden sind, die bei einer Bewegung der bewegbaren Tischplatte 2 gegen die Schwerkraftrichtung ausfahren und bei einer Bewegung der bewegbaren Tischplatte 2 in Richtung der wirkenden Schwerkraft eingeschoben werden.

## Patentansprüche

1. Mehrteiliges Möbel (1) mit zumindest einem für die Verstellung eines in zwei entgegengesetzte Richtungen bewegbaren Möbelteiles (2) vorgesehenen elektromotorischen Antrieb, wobei ein Steuersystem (5) eine bei der Verstellung des Möbelteiles (2) wirksame, zur Verhinderung unzulässiger Betriebszustände vorgesehene Sicherheitseinrichtung (6) umfaßt, **dadurch gekennzeichnet, daß** der Sicherheitseinrichtung (6) ein an dem bewegbaren Möbelteil (2) angebrachter Neigungssensor (7) zugeordnet ist, dessen Ausgangssignal durch die Sicherheitseinrichtung (6) zur Erkennung einer unzulässigen Lage des bewegbaren Möbelteils (2) ausgewertet wird.

2. Mehrteiliges Möbel nach Anspruch 1, **dadurch gekennzeichnet, daß** der Neigungssensor (7) zur Erfassung der Neigung um zwei zueinander senkrechte Achsen vorgesehen ist.

3. Mehrteiliges Möbel nach Anspruch 1 oder 2, **dadurch gekennzeichnet, daß** als Neigungssensor (7) ein ein mikromechanisches Sensorelement aufweisender, kapazitiver Beschleunigungssensor eingesetzt ist.

4. Mehrteiliges Möbel nach einem der Ansprüche 1 bis 3, **dadurch gekennzeichnet, daß** die Sicherheitseinrichtung (6) zusätzlich zur Erfassung einer außergewöhnlichen Veränderung der Belastung des Antriebs (3, 4) ausgelegt ist.

5. Mehrteiliges Möbel nach Anspruch 4, **dadurch gekennzeichnet, daß** die Sicherheitseinrichtung (6) einen eine antriebscharakteristische Größe erfassenden Sensor (8, 9) umfasst.

6. Mehrteiliges Möbel nach Anspruch 5, **dadurch gekennzeichnet, daß** der mindestens eine Sensor (8, 9) die Drehzahl eines elektromotorischen Antriebs (3, 4) erfaßt.

7. Mehrteiliges Möbel nach Anspruch 5, **dadurch gekennzeichnet, daß** der mindestens eine Sensor (8, 9) die Stromaufnahme eines elektromotorischen Antriebs (3, 4) erfaßt.

8. Mehrteiliges Möbel nach einem der Ansprüche 1 bis 7, **dadurch gekennzeichnet, daß** das bewegbare Möbelteil (2) mit mindestens einer Gasdruckfeder derart verbunden ist, daß diese der Gewichtskraft des bewegbaren Möbelteiles (2) entgegenwirkt.

9. Mehrteiliges Möbel nach Anspruch 1, **dadurch gekennzeichnet, daß** das Steuermodul (15) den bzw. die elektromotorischen Antrieb(e) (3, 4) beim Auftreten einer außergewöhnlichen, durch die Sicherheitseinrichtung (6) erfaßten Belastung stoppt oder reversierend ansteuert.

10. Mehrteiliges Möbel nach einem der Ansprüche 1 bis 9, **dadurch gekennzeichnet, daß** das Möbel (1) als Tisch und das bewegbare Möbelteil (2) als Tischplatte ausgebildet ist.

11. Mehrteiliges Möbel nach einem der Ansprüche 1 bis 9, **dadurch gekennzeichnet, daß** das Möbel als Bett und das bewegbare Möbelteil als Lattenrost ausgebildet ist.
